# EUROPEAN PATENT SPECIFICATION

(11) **EP 4 097 528 B1**
(45) Date of publication and mention of the grant of the patent: **30.09.2026**
(21) Application number: 21747949.2
(22) Date of filing: 28.01.2021
(51) Int. Cl.: G02B 13/06, G02B 13/18, G02B 9/62, G02B 13/00

(54) **HIGH RESOLUTION MINIATURE WIDE-ANGLE LENS**
HOCHAUFLÖSENDE MINIATUR-WEITWINKELLINSE
LENTILLE MINIATURE À GRAND ANGLE À HAUTE RÉSOLUTION

(30) Priority: 28.01.2020 US 202062966718 P
(43) Date of publication of application: 07.12.2022
(73) Proprietor: IMMERVISION INC., Montreal, QC H3A 2A5 (CA)
(72) Inventor: DALLAIRE, Xavier, Verdun, Québec H4G 2S5 (CA); PARENT, Jocelyn, Montreal, Québec H4G 2R9 (CA); ZHUANG, Zhenfeng, Montreal, Québec H4E 2E5 (CA); THIBAULT, Simon, Quebec City, Québec G2G 2V7 (CA); ROULET, Patrice, Montreal, Québec H2L 0B9 (CA)
(74) Representative: Petraz, Gilberto Luigi
(86) International application number: PCT/IB2021/050675
(87) International publication number: WO 2021/152502

(56) References cited:
- CN-A- 110 542 989
- CN-A- 110 542 989
- TW-B- I 663 442
- US-A1- 2010 302 647
- US-A1- 2016 282 588
- US-A1- 2017 227 741
- US-A1- 2019 011 672
- US-A1- 2019 041 610
- US-A1- 2020 057 268
- US-A1- 2021 041 669
- US-B2- 8 743 480

## Description

### CROSS-REFERENCE TO RELATED APPLICATIONS

The present application claims the benefit of U.S. Provisional Patent Application No. 62/966,718, filed on January 28, 2020, entitled "High resolution miniature wide-angle lens," currently pending.

### BACKGROUND OF THE INVENTION

Embodiments of the present invention relate to the field of optical lenses and their design and more particularly of an optical construction designed for use on a high-resolution image sensor in a miniature mobile application. Document TW I 663 442 B discloses a photographing optical lens assembly, imaging apparatus and electronic device.

Existing optical lenses fail to offer wide-angle fields of view between 110° and 140° for miniature consumer lenses having a ratio between the optical lens total track length and the image footprint diameter between 0.85 and 0.95 with a distortion profile creating a resolution curve having a maximum number of pixels/degree that is at least 1.75 times larger than the resolution value in the center of the field of view and at least 1.75 times larger than the resolution value at the edge of the field of view.

This unique combination of total field of view, ratio between the total track length and the image footprint diameter and resolution curve would allow for a miniature optical lens creating a high quality image on a larger sensor to be built, with a distortion profile offering the best tradeoff between keeping proportions and keeping straight lines for this kind of wide-angle lens. A new construction for a miniature wide-angle is required to achieve all of these requirements.

### BRIEF SUMMARY OF THE INVENTION

To overcome all the previously mentioned issues, embodiments of the present invention present a novel optical lens construction having a wide-angle total field of view between 110° and 140° including at least six optical elements and having a ratio between the optical lens total track length and the image footprint diameter between 0.85 and 0.95. The lens has a distortion profile creating a resolution curve having a maximum number of pixels/degree that is at least 1.75 times larger than the resolution value in the center of the field of view and at least 1.75 times larger than the resolution value at the edge of the field of view, offering the best tradeoff between keeping proportions and keeping straight lines for this kind of wide-angle lens. In order to achieve the desired resolution curve and keep a good balance of image quality, the object-side surface of the first element is concave in a central region around the optical axis and convex in an outer region surrounding the central region, the image-side surface of the first element is convex in a central region around the optical axis and concave in an outer region surrounding the central region, the object-side surface of the last element is convex in a central region around the optical axis and concave in an outer region surrounding the central region and the image-side surface of the last element is concave in a central region around the optical axis and convex in an outer region surrounding the central region.

### BRIEF DESCRIPTION OF THE SEVERAL VIEWS OF THE DRAWINGS

The foregoing summary, as well as the following detailed description of a preferred embodiment of the invention, will be better understood when read in conjunction with the appended drawings. For the purpose of illustration, there is shown in the drawings an embodiment which is presently preferred. It should be understood, however, that the invention is not limited to the precise arrangements and instrumentalities shown.

In the drawings:
Fig. 1 shows the layout of the optical system for a first embodiment;
Fig. 2 shows a table with the main parameters for the optical lens for the first embodiment;
Fig. 3 shows a table with the aspherical coefficient parameters for the optical lens for the first embodiment;
Fig. 4 shows the resulting resolution curve of the optical lens for the first embodiment;
Fig. 5 shows the layout of the optical system for a second embodiment;
Fig. 6 shows a table with the main parameters for the optical lens for the second embodiment;
Fig. 7 shows a table with the aspherical coefficient parameters for the optical lens for the second embodiment;
Fig. 8 shows the resulting resolution curve of the optical lens for the second embodiment;
Fig. 9 shows the layout of the optical system for a third embodiment;
Fig. 10 shows a table with the main parameters for the optical lens for the third embodiment;
Fig. 11 shows a table with the aspherical coefficient parameters for the optical lens for the third embodiment; and
Fig. 12 shows the resulting resolution curve of the optical lens for the third embodiment.

### DETAILED DESCRIPTION OF THE INVENTION

The words "a" and "an", as used in the claims and in the corresponding portions of the specification, mean "at least one."

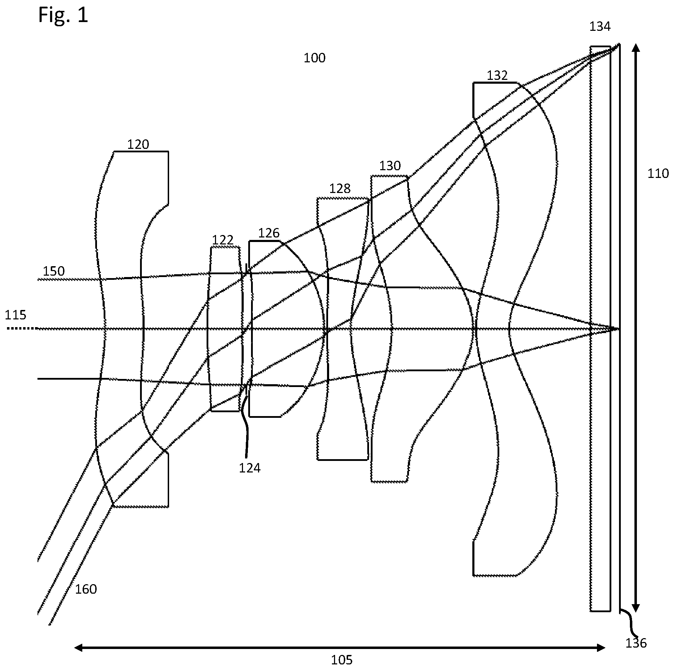

Fig. 1 shows the layout 100 of the optical lens for a first embodiment according to the present invention. The lens includes six optical elements made of plastic material. In an alternate embodiment according to the present invention, at least one of the elements could also be made of glass or other optical material, including diffractive elements or meta-material element. From an object side to an image side, the lens includes a first element 120, a second element 122, an aperture stop 124, a third element 126, a fourth element 128, a fifth element 130, a sixth element 132 and a cover glass also acting as an IR filter 134 before an image plane 136 in which the lens forms an image. An optical axis 115 represents the central axis of symmetry of the optical lens and is perpendicular to the image plane 136. An image sensor is placed at the image plane of the lens when it is forming a camera module. The first element 120 has a negative power in a paraxial region with a focal f1 = -15.35mm. The object-side surface of the first element is concave in a region around the optical axis. This central concave region is surrounded by a convex area in an outer region of its surface. The image-side surface of the first element is convex in a region around the optical axis. This central convex region is surrounded by a concave area in an outer region of its surface. The second element 122 has a positive power in a paraxial region with a focal f2 = 16.41mm. The object-side surface of the second element is convex. The image-side surface of the second element is concave in a region around the optical axis. This central concave region is surrounded by a convex area in an outer region of its surface. The third element 126 has a positive power in a paraxial region with a focal f3 = 1.80mm. The object-side surface of the third element is convex in a region around the optical axis. This central convex region is surrounded by a concave area in an outer region of its surface. The image-side surface of the third element is convex. The fourth element 128 has a negative power in a paraxial region with a focal f4 = -3.36mm. The object-side surface of the fourth element is convex in a region around the optical axis. This central convex region is surrounded by a concave area in an outer region of its surface. The image-side surface of the fourth element is concave in a region around the optical axis. This central concave region is surrounded by a convex area in an outer region of its surface. The fifth element 130 has a positive power in a paraxial region with a focal f5 = 1.90mm. The object-side surface of the fifth element is concave in a region around the optical axis. This central concave region is surrounded by a convex area in an outer region of its surface. The image-side surface of the fifth element is convex. The sixth element 132 has a negative power in a paraxial region with a focal f6 = -2.61mm. The object-side surface of the sixth element is convex in a region around the optical axis. This central convex region is surrounded by a concave area in an outer region of its surface. The image-side surface of the sixth element is concave in a region around the optical axis. This central concave region is surrounded by a convex area in an outer region of its surface.

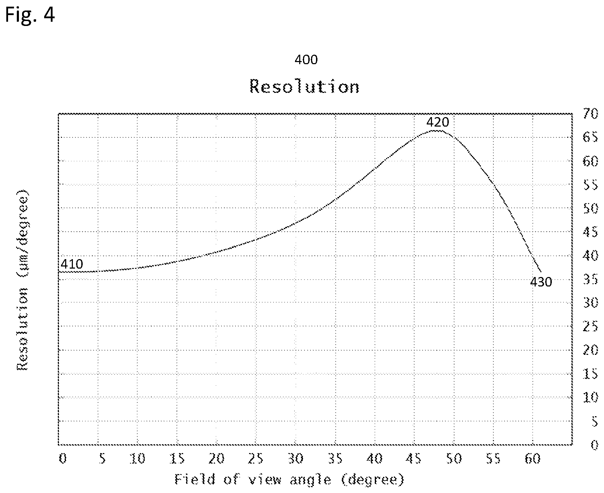

Also on the figure, the rays 150 represent the rays coming from an object in the center of the field of view (object angle of 0°) while the rays 160 represent the rays coming from an object at the maximum field of view (object angle of 62.5°). Because of symmetry, the total field of view of this lens is twice this angle, for a total field of view of 125°. With this unique combination of 6 optical elements including 12 aspherical freeform surfaces, with 9 surfaces having at least one change of curvature from either concave to convex or convex to concave, this lens construction can achieve better distortion control as will be explained with respect to Fig. 4 than existing prior art, while keeping a ratio between the optical lens total track length 105 and the image footprint diameter 110 of 0.905, which is within the target between 0.85 and 0.95, allowing a miniature optical lens that covers the full diagonal of large image sensors having generally resolutions of 5 to 25MPx depending on the pixel size. The focal length of the full optical lens is 2.08mm in this example embodiment, but in any wide-angle lens embodiment according to the present invention, the focal length is generally under 2.5mm.

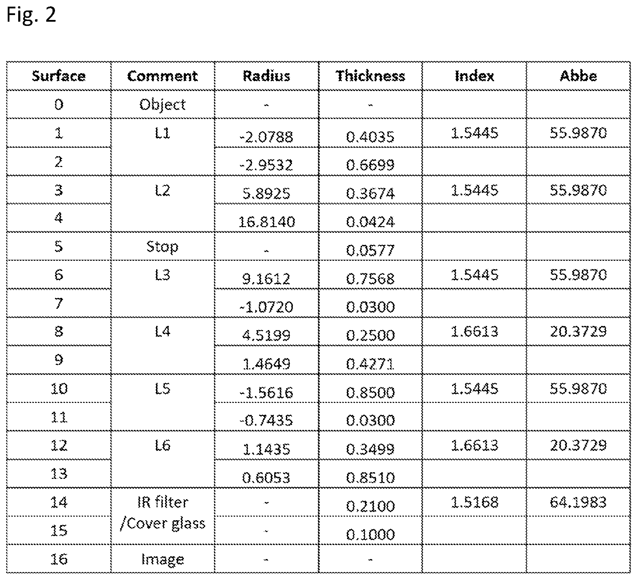

The table at Fig. 2 shows the main parameters of the optical prescription for the optical lens for a first embodiment according to the present invention. In this table, surface 0 represents the object at an infinite distance from the lens, surfaces 1 to 4 and 6 to 13 represent the 6 aspherical optical elements, surface 5 represents the aperture stop, surfaces 14 and 15 represent the coverglass also acting as an IR filter and surface 16 is the image plane. For each surface, the radius, thickness, index of refraction and Abbe number are given. The materials used in this example have index and Abbe number values given in the table of Fig. 2, but other values could be used in other embodiments of the current optical lens. In all embodiments, when V1 represents the Abbe number of the first lens element, V2 the Abbe number of the second lens element, V3 the Abbe number of the third lens element, V4 the Abbe number of the fourth lens element, V5 the Abbe number of the fifth lens element and V6 the Abbe number of the sixth lens element, the following conditions are respected: V1>40, V2>40, V3>40, V4<40, V5>40, V6<40.

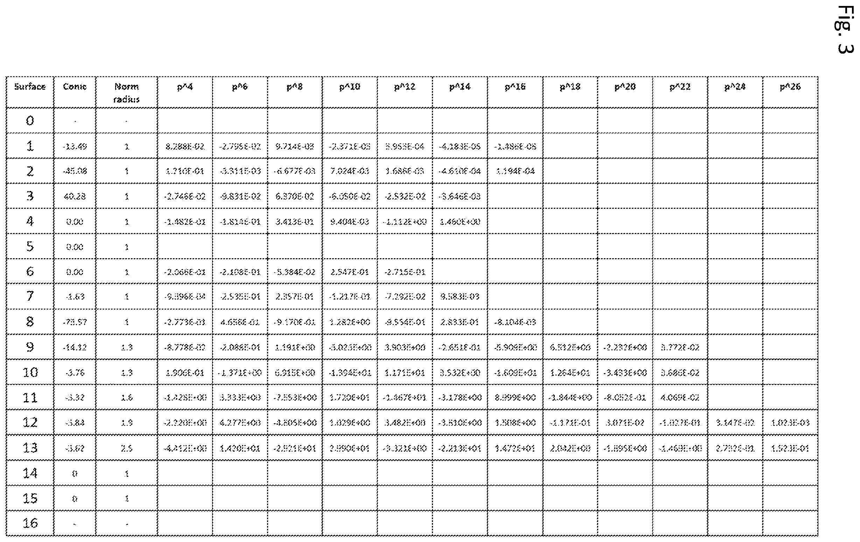

The table of Fig. 3 shows the conic constant, the normalization radius and the aspherical coefficient for the 12 aspherical freeform surfaces in this optical lens for a first embodiment. For each surface, the sag Z at a given height r is given by the equation: $Z = \frac{{cr}^{2}}{1 + \sqrt{1 - \left(1+k\right) {c}^{2} {r}^{2}}} + {\sum }_{i = 1}^{N} {α}_{i} {p}^{2 i}$ where c is the curvature (inverse of the radius of curvature from the table of Fig. 2), k is the conic constant, αᵢ are the aspherical coefficient from the table of Fig. 3 and p is the normalized radius coordinate obtained by dividing the coordinate r by the normalization radius from the table of Fig. 3.

Fig. 4 shows the resolution curve 400 resulting from the unique distortion profile of the optical lens for the first embodiment according to the present invention. The resolution curve is the mathematical derivative of the position curve, which is the image height in the image plane in µm as a function of the field of view angle in degree. The resolution curve is thus given in µm/degree as a function of the field of view angle in degree. The resolution curve for the optical lens according to the present invention has a maximum resolution of 66.4 µm/° at an object angle of 47.8° shown at 420 on the graph, a resolution value of 36.5 µm/° in the center where the object angle is 0° shown at 410 on the graph and a resolution value of 33.6 µm/° at the edge of the field of view where the object angle is 62.5° shown at 430 on the graph. The ratio between the maximum value and the central value is ≈1.82 and the ratio between the maximum value and the edge value is ≈1.98. Both of these ratios are higher than 1.75, allowing the ideal balance between keeping the straight lines in the object as straight as possible in the image as well as keeping the ideal proportions especially in the corners of the image without undesirable stretching.

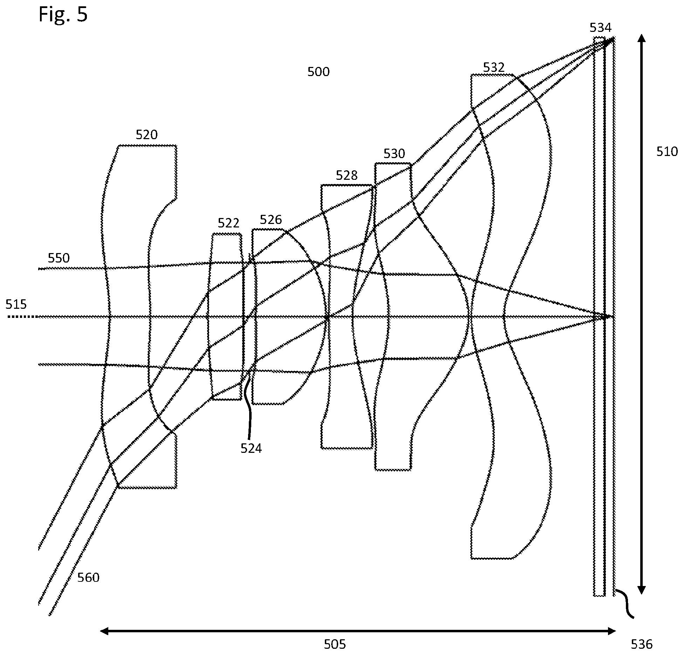

Fig. 5 shows the layout 500 of the optical lens for a second embodiment according to the present invention. The lens includes six optical elements made of plastic material. In an alternate embodiment according to the present invention, at least one of the elements could also be made of glass or other optical material, including diffractive elements or meta-material element. From an object side to an image side, the lens includes a first element 520, a second element 522, an aperture stop 524, a third element 526, a fourth element 528, a fifth element 530, a sixth element 532 and a cover glass also acting as an IR filter 534 before an image plane 536 in which the lens form an image. An optical axis 515 represents the central axis of symmetry of the optical lens and is perpendicular to the image plane 536. An image sensor is placed at the image plane of the lens when it is forming a camera module. The first element 520 has a negative power in a paraxial region with a focal f1 = -12.87mm. The object-side surface of the first element is concave in a region around the optical axis. This central concave region is surrounded by a convex area in an outer region of its surface. The image-side surface of the first element is convex in a region around the optical axis. This central convex region is surrounded by a concave area in an outer region of its surface. The second element 522 has a positive power in a paraxial region with a focal f2 = 14.19mm. The object-side surface of the second element is convex. The image-side surface of the second element is concave in a region around the optical axis. This central concave region is surrounded by a convex area in an outer region of its surface. The third element 526 has a positive power in a paraxial region with a focal f3 = 1.88mm. The object-side surface of the third element is convex in a region around the optical axis. This central convex region is surrounded by a concave area in an outer region of its surface. The image-side surface of the third element is convex. The fourth element 528 has a negative power in a paraxial region with a focal f4 = -3.48mm. The object-side surface of the fourth element is convex in a region around the optical axis. This central convex region is surrounded by a concave area in an outer region of its surface. The image-side surface of the fourth element is concave in a region around the optical axis. This central concave region is surrounded by a convex area in an outer region of its surface. The fifth element 530 has a positive power in a paraxial region with a focal f5 = 1.88mm. The object-side surface of the fifth element is concave in a region around the optical axis. This central concave region is surrounded by a convex area in an outer region of its surface. The image-side surface of the fifth element is convex. The sixth element 532 has a negative power in a paraxial region with a focal f6 = -2.67mm. The object-side surface of the sixth element is convex in a region around the optical axis. This central convex region is surrounded by a concave area in an outer region of its surface. The image-side surface of the sixth element is concave in a region around the optical axis. This central concave region is surrounded by a convex area in an outer region of its surface.

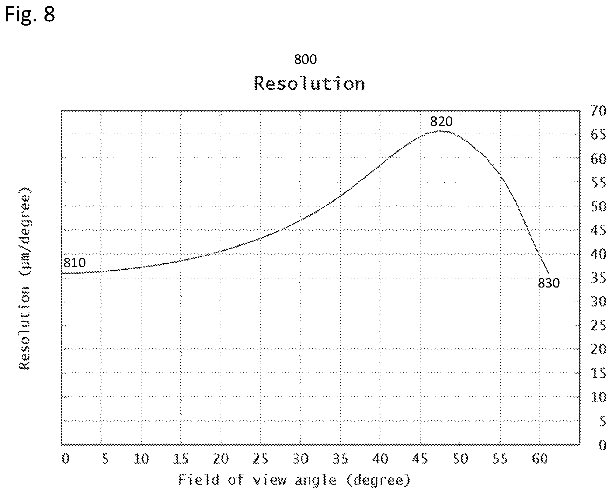

Also on the figure, the rays 550 represent the rays coming from an object in the center of the field of view (object angle of 0°) while the rays 560 represent the rays coming from an object at the maximum field of view (object angle of 62.5°). Because of symmetry, the total field of view of this lens is twice this angle, for a total field of view of 125°. With this unique combination of 6 optical elements including 12 aspherical freeform surfaces, with 9 surfaces having at least one change of curvature from either concave to convex or convex to concave, this lens construction can achieve better distortion control as will be explained with respect to Fig. 8 than existing prior art, while keeping a ratio between the optical lens total track length 505 and the image footprint diameter 510 of 0.904, which is within the target between 0.85 and 0.95, allowing a miniature optical lens that covers the full diagonal of large image sensors having generally resolutions of 5 to 25MPx depending on the pixel size. The focal length of the full optical lens is 2.04mm in this example embodiment, but in any wide-angle lens embodiment according to the present invention, the focal length is generally under 2.5mm.

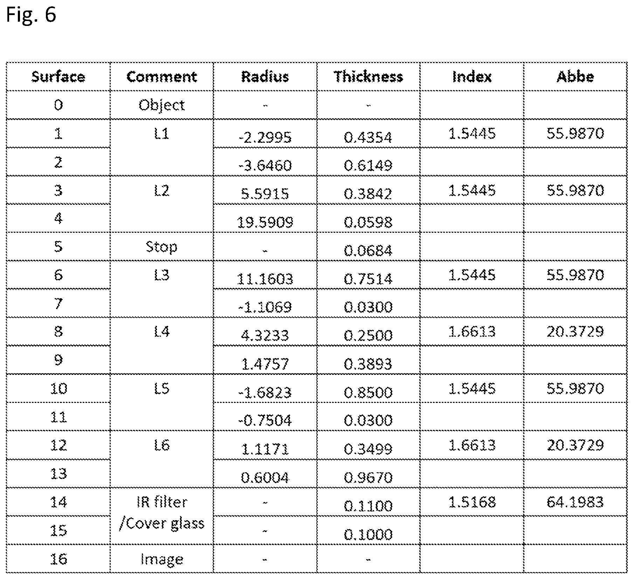

The table at Fig. 6 shows the main parameters of the optical prescription for the optical lens for the second embodiment according to the present invention. In this table, surface 0 represents the object at an infinite distance from the lens, surfaces 1 to 4 and 6 to 13 represent the 6 aspherical optical elements, surface 5 represent the aperture stop, surfaces 14 and 15 represent the coverglass also acting as an IR filter and surface 16 is the image plane. For each surface, the radius, thickness, index of refraction and Abbe number are given. The materials used in this example have index and Abbe number values given in the table of Fig. 6, but other values could be used in other embodiments of the current optical lens. In all embodiments, when V1 represents the Abbe number of the first lens element, V2 the Abbe number of the second lens element, V3 the Abbe number of the third lens element, V4 the Abbe number of the fourth lens element, V5 the Abbe number of the fifth lens element and V6 the Abbe number of the sixth lens element, the following conditions are respected: V1>40, V2>40, V3>40, V4<40, V5>40, V6<40.

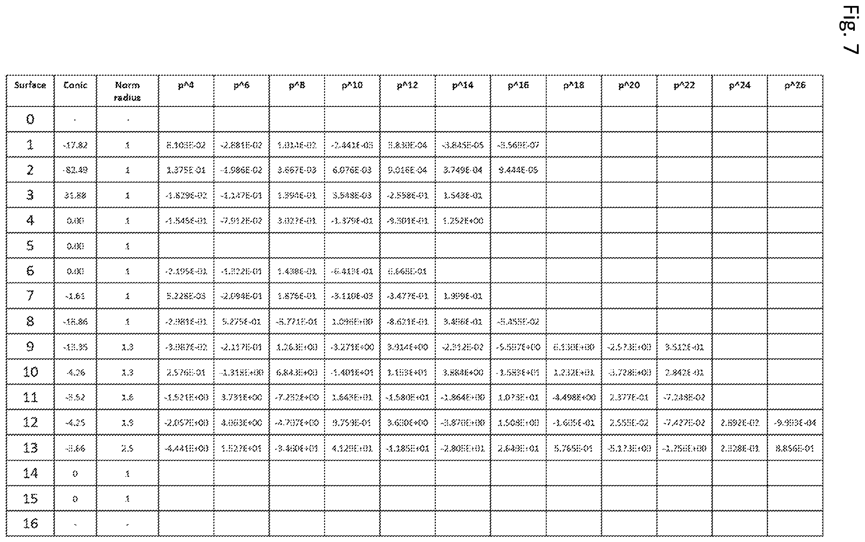

The table of Fig. 7 shows the conic constant, the normalization radius and the aspherical coefficient for the 12 aspherical freeform surfaces in this optical lens for the second embodiment. For each surface, the sag Z at a given height r is given by the equation: $Z = \frac{{cr}^{2}}{1 + \sqrt{1 - \left(1+k\right) {c}^{2} {r}^{2}}} + {\sum }_{i = 1}^{N} {α}_{i} {p}^{2 i}$ where c is the curvature (inverse of the radius of curvature from the table of Fig. 6), k is the conic constant, αᵢ are the aspherical coefficient from the table of Fig. 7 and p is the normalized radius coordinate obtained by dividing the coordinate r by the normalization radius from the table of Fig. 7.

Fig. 8 shows the resolution curve 800 resulting from the unique distortion profile of the optical lens for the second embodiment according to the present invention. The resolution curve is the mathematical derivative of the position curve, which is the image height in the image plane in µm as a function of the field of view angle in degree. The resolution curve is thus given in µm/degree as a function of the field of view angle in degree. The resolution curve for the optical lens according to the present invention has a maximum resolution of 65.8 µm/° at an object angle of 47.5° shown at 820 on the graph, a resolution value of 35.9 µm/° in the center where the object angle is 0° shown at 810 on the graph and a resolution value of 33.3 µm/° at the edge of the field of view where the object angle is 62.5° shown at 830 on the graph. The ratio between the maximum value and the central value is ≈1.83 and the ratio between the maximum value and the edge value is ≈1.98. Both of these ratios are higher than 1.75, allowing the ideal balance between keeping the straight lines in the object as straight as possible in the image as well as keeping the ideal proportions especially in the corners of the image without undesirable stretching.

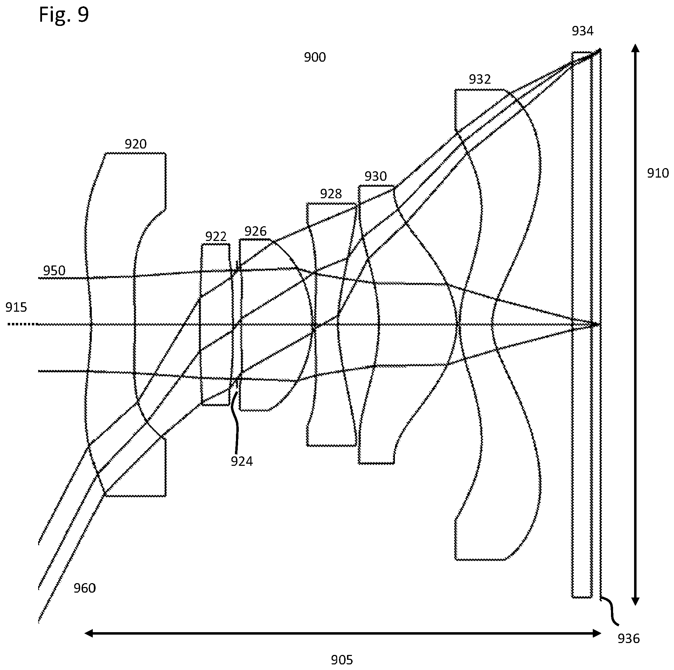

Fig. 9 shows the layout 900 of the optical lens for a third embodiment according to the present invention. The lens includes six optical elements made of plastic material. In an alternate embodiment according to the present invention, at least one of the elements could also be made of glass or other optical material, including diffractive elements or meta-material element. From an object side to an image side, the lens includes a first element 920, a second element 922, an aperture stop 924, a third element 926, a fourth element 928, a fifth element 930, a sixth element 932 and a cover glass also acting as an IR filter 934 before an image plane 936 in which the lens form an image. An optical axis 915 represents the central axis of symmetry of the optical lens and is perpendicular to the image plane 936. An image sensor is placed at the image plane of the lens when it is forming a camera module. The first element 920 has a negative power in a paraxial region with a focal f1 = -10.11mm. The object-side surface of the first element is concave in a region around the optical axis. This central concave region is surrounded by a convex area in an outer region of its surface. The image-side surface of the first element is convex in a region around the optical axis. This central convex region is surrounded by a concave area in an outer region of its surface. The second element 922 has a positive power in a paraxial region with a focal f2 = 14.43mm. The object-side surface of the second element is convex. The image-side surface of the second element is convex. The third element 926 has a positive power in a paraxial region with a focal f3 = 1.90mm. The object-side surface of the third element is convex in a region around the optical axis. This central convex region is surrounded by a concave area in an outer region of its surface. The image-side surface of the third element is convex. The fourth element 928 has a negative power in a paraxial region with a focal f4 = -3.62mm. The object-side surface of the fourth element is convex in a region around the optical axis. This central convex region is surrounded by a concave area in an outer region of its surface. The image-side surface of the fourth element is concave in a region around the optical axis. This central concave region is surrounded by a convex area in an outer region of its surface. The fifth element 930 has a positive power in a paraxial region with a focal f5 = 2.01mm. The object-side surface of the fifth element is concave in a region around the optical axis. This central concave region is surrounded by a convex area in an outer region of its surface. The image-side surface of the fifth element is convex in a region around the optical axis. This central convex region is surrounded by a concave area in an outer region of its surface. The sixth element 932 has a negative power in a paraxial region with a focal f6 = -2.92mm. The object-side surface of the sixth element is convex in a region around the optical axis. This central convex region is surrounded by a concave area in an outer region of its surface. The image-side surface of the sixth element is concave in a region around the optical axis. This central concave region is surrounded by a convex area in an outer region of its surface.

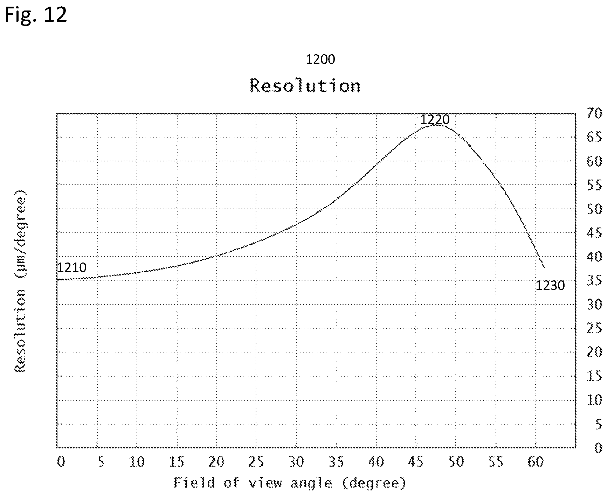

Also on the figure, the rays 950 represent the rays coming from an object in the center of the field of view (object angle of 0°) while the rays 960 represent the rays coming from an object at the maximum field of view (object angle of 62.5°). Because of symmetry, the total field of view of this lens is twice this angle, for a total field of view of 125°. With this unique combination of 6 optical elements including 12 aspherical freeform surfaces, with 9 surfaces having at least one change of curvature from either concave to convex or convex to concave, this lens construction can achieve better distortion control as will be explained with respect to Fig. 12 than existing prior art, while keeping a ratio between the optical lens total track length 905 and the image footprint diameter 910 of 0.926, which is within the target between 0.85 and 0.95, allowing a miniature optical lens that covers the full diagonal of large image sensors having generally resolutions of 5 to 25MPx depending on the pixel size. The focal length of the full optical lens is 2.01mm in this example embodiment, but in any wide-angle lens embodiment according to the present invention, the focal length is generally under 2.5mm.

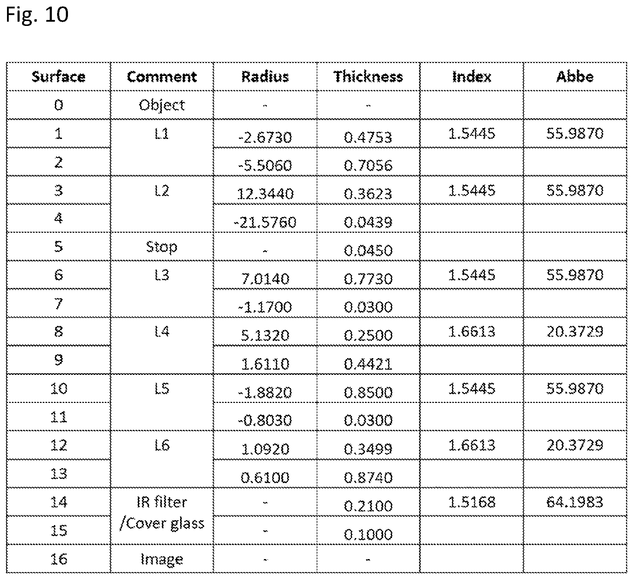

The table at Fig. 10 shows the main parameters of the optical prescription for the optical lens for the third embodiment according to the present invention. In this table, surface 0 represents the object at an infinite distance from the lens, surfaces 1 to 4 and 6 to 13 represent the 6 aspherical optical elements, surface 5 represents the aperture stop, surfaces 14 and 15 represent the coverglass also acting as an IR filter and surface 16 is the image plane. For each surface, the radius, thickness, index of refraction and Abbe number are given. The materials used in this example have index and Abbe number values given in the table of Fig. 10, but other values could be used in other embodiments of the current optical lens. In all embodiments, when V1 represents the Abbe number of the first lens element, V2 the Abbe number of the second lens element, V3 the Abbe number of the third lens element, V4 the Abbe number of the fourth lens element, V5 the Abbe number of the fifth lens element and V6 the Abbe number of the sixth lens element, the following conditions are respected: V1>40, V2>40, V3>40, V4<40, V5>40, V6<40.

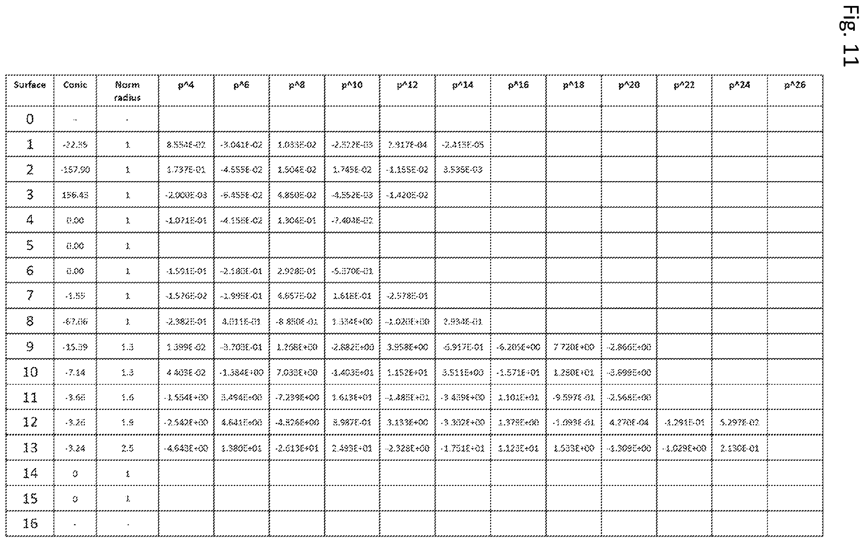

The table of Fig. 11 shows the conic constant, the normalization radius and the aspherical coefficient for the 12 aspherical freeform surfaces in this optical lens for the third embodiment. For each surface, the sag Z at a given height r is given by the equation: $Z = \frac{{cr}^{2}}{1 + \sqrt{1 - \left(1+k\right) {c}^{2} {r}^{2}}} + {\sum }_{i = 1}^{N} {α}_{i} {p}^{2 i}$ where c is the curvature (inverse of the radius of curvature from table of Fig. 10), k is the conic constant, αᵢ are the aspherical coefficient from the table of Fig. 11 and p is the normalized radius coordinate obtained by dividing the coordinate r by the normalization radius from the table of Fig. 11.

Fig. 12 shows the resolution curve 1200 resulting from the unique distortion profile of the optical lens for the third embodiment according to the present invention. The resolution curve is the mathematical derivative of the position curve, which is the image height in the image plane in µm as a function of the field of view angle in degree. The resolution curve is thus given in µm/degree as a function of the field of view angle in degree. The resolution curve for the optical lens according to the present invention has a maximum resolution of 67.6 µm/° at an object angle of 47.6° shown at 1220 on the graph, a resolution value of 35.2 µm/° in the center where the object angle is 0° shown at 1210 on the graph and a resolution value of 33.4 µm/° at the edge of the field of view where the object angle is 62.5° shown at 1230 on the graph. The ratio between the maximum value and the central value is ≈1.92 and the ratio between the maximum value and the edge value is ≈2.02. Both of these ratios are higher than 1.75, allowing the ideal balance between keeping the straight lines in the object as straight as possible in the image as well as keeping the ideal proportions especially in the corners of the image without undesirable stretching.

All embodiments presented were using aspherical shapes with rotational symmetry, but any freeform surface with or without rotational symmetry could also be used according to the present invention. In some embodiments, at least one asymmetric freeform surface could be used to create an anamorphic image plane in which the focal length in a first direction is larger than the focal length in a second perpendicular direction. This optional stretching of the image in a direction is useful especially when the image sensor is of rectangular shape and the lens is optimal when having different magnifications in both main directions of the image sensor. In these cases, the field of view in a first direction could be different or not from the field of view in a second direction perpendicular to the first direction.

All of the above figures and example show embodiments of the miniature optical lens having a total field of view between 110° and 140°, but other similar embodiments could be possible with small departures from the present lens prescriptions. In most embodiments, the optical lenses have a ratio between the optical lens total track length and the image footprint diameter between 0.85 and 0.95. In most embodiments, the lenses have a distortion profile creating a resolution curve having a maximum number of pixels/degree that is at least 1.75 times larger than the resolution value in the center of the field of view and at least 1.75 times larger than the resolution value at the edge of the field of view. In most embodiments, in order to achieve the desired resolution curve and keeping a good balance of image quality, the object-side surface of the first element has a concave curvature in a central region around the optical axis and a convex curvature in an outer region surrounding the central region, the image-side surface of the first element has a convex curvature in a central region around the optical axis and a concave curvature in an outer region surrounding the central region, the object-side surface of the last element has a convex curvature in a central region around the optical axis and a concave curvature in an outer region surrounding the central region and the image-side surface of the last element has a concave curvature in a central region around the optical axis and a convex curvature in an outer region surrounding the central region. In addition to these four surfaces having a change of curvature from either concave to convex or convex to concave from the center to the edge of the surface, in most embodiments there are at least eight total surfaces having these changes of curvature.

These examples are not intended to be an exhaustive list or to limit the scope of the present invention. It will be appreciated by those skilled in the art that changes could be made to the embodiments described above without departing from the scope of the claims. It is understood, therefore, that this invention is not limited to the particular embodiments disclosed, but it is intended to cover modifications within the scope of the present invention as defined by the appended claims.

## Claims

1. An optical imaging lens (100, 500, 900) comprising:
a first optical element (120, 520, 920) having an object-side surface and an image-side surface, the object-side surface of the first optical element (120, 520, 920) having a concave curvature in a central region and a convex curvature in an outer region surrounding the central region, the image-side surface of the first optical element (120, 520, 920) having a convex curvature in a central region and a concave curvature in an outer region surrounding the central region; and
a last optical element (132, 532, 932) having an object-side surface and an image-side surface, the object-side surface of the last optical element (132, 532, 932) having a convex curvature in a central region and a concave curvature in an outer region surrounding the central region, and the image-side surface of the last optical element (132, 532, 932) having a concave curvature in a central region and a convex curvature in an outer region surrounding the central region,
the optical imaging lens having a total field of view value between 110° and 140°, a ratio of a total track length (105, 505, 905) to an image footprint diameter (110, 510, 910) between 0.85 and 0.95, **characterised by** further having a ratio between a maximum resolution value (420, 820, 1220) and a central resolution value (410, 810, 1210) higher than 1.75, and a ratio between the maximum resolution value (420, 820, 1220) and an edge resolution value (430, 830, 1230) higher than 1.75.

2. The optical imaging lens of claim 1, wherein the optical imaging lens (100, 500, 900) comprises six optical elements (120, 122, 126, 128, 130, 132, 520, 522, 526, 528, 530, 532, 920, 922, 926, 928, 930, 932) including the first and last optical elements (120, 520, 920, 132, 532, 932).

3. The optical imaging lens of claim 2, wherein the first optical element (120, 520, 920) has an Abbe number value larger than 40, a second optical element (122, 522, 922) has an Abbe number value larger than 40, a third optical element (126, 526, 926) has an Abbe number value larger than 40, a fourth optical element (128, 528, 928) has an Abbe number value smaller than 40, a fifth optical element (130, 530, 930) has an Abbe number value larger than 40 and the last optical element (132, 532, 932) has an Abbe number value smaller than 40.

4. The optical imaging lens of claim 2, wherein the first optical element (120, 520, 920) has a negative power in a paraxial region, a second optical element (122, 522, 922) has a positive power in a paraxial region, a third optical element (126, 526, 926) has a positive power in a paraxial region, a fourth optical element (128, 528, 928) has a negative power in a paraxial region, a fifth optical element (130, 530, 930) has a positive power in a paraxial region and the last optical element (132, 532, 932) has a negative power in a paraxial region.

5. The optical imaging lens of claim 1, wherein at least one optical element of the optical imaging lens has at least one asymmetric freeform surface.

6. The optical imaging lens of claim 1, wherein all optical elements of the optical imaging lens (100, 500, 900), including the first and last optical elements (120, 520, 920, 132, 532, 932), are made of plastic material.

7. An optical imaging lens (100, 500, 900) comprising a plurality of optical elements (120, 122, 126, 128, 130, 132, 520, 522, 526, 528, 530, 532, 920, 922, 926, 928, 930, 932), the optical imaging lens (100, 500, 900) having a total field of view value between 110° and 140°, a ratio of a total track length (105, 505, 905) to an image footprint diameter (110, 510, 910) between 0.85 and 0.95, a ratio between a maximum resolution value (420, 820, 1220) and a central resolution value (410, 810, 1210) higher than 1.75, and a ratio between the maximum resolution value (420, 820, 1220) and an edge resolution value (430, 830, 1230) higher than 1.75.

8. The optical imaging lens of claim 7, the plurality of optical elements comprises six optical elements (120, 122, 126, 128, 130, 132, 520, 522, 526, 528, 530, 532, 920, 922, 926, 928, 930, 932).

9. The optical imaging lens of claim 8, wherein a first optical element (120, 520, 920) has an Abbe number value larger than 40, a second optical element (122, 522, 922) has an Abbe number value larger than 40, a third optical element (126, 526, 926) has an Abbe number value larger than 40, a fourth optical element (128, 528, 928) has an Abbe number value smaller than 40, a fifth optical element (130, 530, 930) has an Abbe number value larger than 40 and a sixth optical element (132, 532, 932) has an Abbe number value smaller than 40.

10. The optical imaging lens of claim 8, wherein a first optical element (120, 520, 920) has a negative power in a paraxial region, a second optical element (122, 522, 922) has a positive power in a paraxial region, a third optical element (126, 526, 926) has a positive power in a paraxial region, a fourth optical element (128, 528, 928) has a negative power in a paraxial region, a fifth optical element (130, 530, 930) has a positive power in a paraxial region and a sixth optical element (132, 532, 932) has a negative power in a paraxial region.

11. The optical imaging lens of claim 7, wherein at least one of the plurality of optical elements has at least one asymmetric freeform surface.

12. The optical imaging lens of claim 7, wherein the plurality of optical elements are all made of plastic material.

## Patentansprüche

1. Optisches Abbildungsobjektiv (100, 500, 900) mit
einem ersten optischen Element (120, 520, 920), das eine objektseitige Oberfläche und eine bildseitige Oberfläche aufweist, die objektseitige Oberfläche des ersten optische Elements (120, 520, 920) hat eine konkave Krümmung in einer zentralen Region und eine konvexe Krümmung in einer die zentrale Region umgebenden äußeren Region, die bildseitige Oberfläche des ersten optischen Elements (120, 520, 920) hat eine konvexe Krümmung in einer zentralen Region und eine konkave Krümmung in einer die zentrale Region umgebenden äußeren Region; und
einem letzten optisches Element (132, 532, 932), das eine objektseitige Oberfläche und eine bildseitige Oberfläche aufweist, die objektseitige Oberfläche des letzten optische Elements (132, 532, 932) hat eine konvexe Krümmung in einer zentralen Region und eine konkave Krümmung in einer die zentrale Region umgebenden äußeren Region, die bildseitige Oberfläche des letzten optischen Elements (132, 532, 932) hat eine konkave Krümmung in einer zentralen Region und eine konvexe Krümmung in einer die zentrale Region umgebenden äußeren Region, wobei
das optische Abbildungsobjektiv einen Wert des Gesamtsichtfelds zwischen 110° und 140°, und eine Rate der Gesamtweglänge (105, 505, 905) zu einem Bildabdrucksdurchmesser (110, 510, 910) zwischen 0.85 und 0.95 hat, **dadurch gekennzeichnet**, ferner eine Rate zwischen einem maximalen Auflösungswert (420, 820, 1220) und einem zentralen Auflösungswert (410, 810, 1210) von größer als 1.75, und eine Rate zwischen einem maximalen Auflösungswert (420, 820, 1220) und einem Randauflösungswert (430, 830, 1230) von größer als 1.75 zu haben.

2. Optisches Abbildungsobjektiv nach Anspruch 1, wobei das optische Abbildungsobjektiv (100, 500, 900) sechs optische Elemente (120, 122, 126, 128, 130, 132, 520, 522, 526, 528, 530, 532, 920, 922, 926, 928, 930, 932) aufweist, die das erste und das letzte optische Element (120, 520, 920, 132, 532, 932) umfassen.

3. Optisches Abbildungsobjektiv nach Anspruch 2, wobei
das erste optische Element (120, 520, 920) einen Abbe Zahlenwert größer als 40 hat,
ein zweites optisches Element (122, 522, 922) einen Abbe Zahlenwert größer als 40 hat,
ein drittes optisches Element (126, 526, 926) einen Abbe Zahlenwert größer als 40 hat,
ein viertes optisches Element (128, 528, 928) einen Abbe Zahlenwert kleiner als 40 hat,
ein fünftes optisches Element (130, 530, 930) einen Abbe Zahlenwert größer als 40 hat, und
das letzte optische Element (132, 532, 932) einen Abbe Zahlenwert kleiner als 40 hat.

4. Optisches Abbildungsobjektiv nach Anspruch 2, wobei
das erste optische Element (120, 520, 920) eine negative Brechkraft in einem paraxialen Bereich hat,
ein zweites optisches Element (122, 522, 922) eine positive Brechkraft in einem paraxialen Bereich hat,
ein drittes optisches Element (126, 526, 926) eine positive Brechkraft in einem paraxialen Bereich hat,
ein viertes optisches Element (128, 528, 928) eine negative Brechkraft in einem paraxialen Bereich hat,
ein fünftes optisches Element (130, 530, 930) eine positive Brechkraft in einem paraxialen Bereich hat, und
das letzte optische Element (132, 532, 932) eine negative Brechkraft in einem paraxialen Bereich hat.

5. Optisches Abbildungsobjektiv nach Anspruch 1, wobei zumindest ein optisches Element des optischen Abbildungsobjektivs zumindest eine asymmetrische Freiformoberfläche hat.

6. Optisches Abbildungsobjektiv nach Anspruch 1, wobei alle optischen Elemente des optischen Abbildungsobjektivs (100, 500, 900), das erste und das letzte optische Element (120, 520, 920, 132, 532, 932) eingeschlossen, aus Kunststoffmaterial gefertigt sind.

7. Optisches Abbildungsobjektiv (100, 500, 900) mit einer Vielzahl von optisches Elementen (120, 122, 126, 128, 130, 132, 520, 522, 526, 528, 530, 532, 920, 922, 926, 928, 930, 932), wobei das optische Abbildungsobjektiv (100, 500, 900) einen Wert des Gesamtsichtfelds zwischen 110° und 140°, eine Rate der Gesamtweglänge (105, 505, 905) zu einem Bildabdrucksdurchmesser (110, 510, 910) zwischen 0.85 und 0.95, eine Rate zwischen einem maximalen Auflösungswert (420, 820, 1220) und einem zentralen Auflösungswert (410, 810, 1210) von größer als 1.75, und eine Rate zwischen einem maximalen Auflösungswert (420, 820, 1220) und einem Randauflösungswert (430, 830, 1230) von größer als 1.75 hat.

8. Optisches Abbildungsobjektiv nach Anspruch 7, wobei die Vielzahl von optischen Elementen sechs optische Elemente (120, 122, 126, 128, 130, 132, 520, 522, 526, 528, 530, 532, 920, 922, 926, 928, 930, 932) umfasst.

9. Optisches Abbildungsobjektiv nach Anspruch 8, wobei
ein erstes optische Element (120, 520, 920) einen Abbe Zahlenwert größer als 40 hat,
ein zweites optisches Element (122, 522, 922) einen Abbe Zahlenwert größer als 40 hat,
ein drittes optisches Element (126, 526, 926) einen Abbe Zahlenwert größer als 40 hat,
ein viertes optisches Element (128, 528, 928) einen Abbe Zahlenwert kleiner als 40 hat,
ein fünftes optisches Element (130, 530, 930) einen Abbe Zahlenwert größer als 40 hat, und
ein sechstes optisches Element (132, 532, 932) einen Abbe Zahlenwert kleiner als 40 hat.

10. Optisches Abbildungsobjektiv nach Anspruch 8, wobei
ein erstes optische Element (120, 520, 920) eine negative Brechkraft in einem paraxialen Bereich hat,
ein zweites optisches Element (122, 522, 922) eine positive Brechkraft in einem paraxialen Bereich hat,
ein drittes optisches Element (126, 526, 926) eine positive Brechkraft in einem paraxialen Bereich hat,
ein viertes optisches Element (128, 528, 928) eine negative Brechkraft in einem paraxialen Bereich hat,
ein fünftes optisches Element (130, 530, 930) eine positive Brechkraft in einem paraxialen Bereich hat, und
ein sechstes optische Element (132, 532, 932) eine negative Brechkraft in einem paraxialen Bereich hat.

11. Optisches Abbildungsobjektiv nach Anspruch 7, wobei zumindest eines aus der Vielzahl von optischen Elementen zumindest eine asymmetrische Freiformoberfläche hat.

12. Optisches Abbildungsobjektiv nach Anspruch 7, wobei die Vielzahl von optischen Elementen alle aus Kunststoffmaterial gefertigt sind.

## Revendications

1. Une lentille d'imagerie optique (100, 500, 900) comprenant :
un premier élément optique (120, 520, 920) ayant une surface côté objet et une surface côté image, la surface côté objet du premier élément optique (120, 520, 920) ayant une courbure concave dans une région centrale et une courbure convexe dans une région périphérique entourant la région centrale, la surface côté image du premier élément optique (120, 520, 920) ayant une courbure convexe dans une région centrale et une courbure concave dans une région périphérique entourant la région centrale ; et
un dernier élément optique (132, 532, 932) ayant une surface côté objet et une surface côté image, la surface côté objet du dernier élément optique (132, 532, 932) ayant une courbure convexe dans une région centrale et une courbure concave dans une région périphérique entourant la région centrale, et la surface côté image du dernier élément optique (132, 532, 932) ayant une courbure concave dans une région centrale et une courbure convexe dans une région périphérique entourant la région centrale,
la lentille d'imagerie optique ayant une valeur de champ de vision total comprise entre 110° et 140°, un rapport entre une longueur totale de parcours (105, 505, 905) et un diamètre d'empreinte d'image (110, 510, 910) compris entre 0.85 et 0.95,
**caractérisée en ce qu'**elle présente en outre un rapport entre une valeur de résolution maximale (420, 820, 1220) et une valeur de résolution centrale (410, 810, 1210) supérieur à 1.75, et un rapport entre la valeur de résolution maximale (420, 820, 1220) et une valeur de résolution de bord (430, 830, 1230) supérieur à 1.75.

2. La lentille d'imagerie optique selon la revendication 1, dans laquelle la lentille d'imagerie optique (100, 500, 900) comprend six éléments optiques (120, 122, 126, 128, 130, 132, 520, 522, 526, 528, 530, 532, 920, 922, 926, 928, 930, 932) incluant les premier et dernier éléments optiques (120, 520, 920, 132, 532, 932).

3. La lentille d'imagerie optique selon la revendication 2, dans laquelle le premier élément optique (120, 520, 920) a une valeur de nombre d'Abbe supérieure à 40, un deuxième élément optique (122, 522, 922) a une valeur de nombre d'Abbe supérieure à 40, un troisième élément optique (126, 526, 926) a une valeur de nombre d'Abbe supérieure à 40, un quatrième élément optique (128, 528, 928) a une valeur de nombre d'Abbe inférieure à 40, un cinquième élément optique (130, 530, 930) a une valeur de nombre d'Abbe supérieure à 40 et le dernier élément optique (132, 532, 932) a une valeur de nombre d'Abbe inférieure à 40.

4. La lentille d'imagerie optique selon la revendication 2, dans laquelle le premier élément optique (120, 520, 920) a une puissance négative dans une région paraxiale, un deuxième élément optique (122, 522, 922) a une puissance positive dans une région paraxiale, un troisième élément optique (126, 526, 926) a une puissance positive dans une région paraxiale, un quatrième élément optique (128, 528, 928) a une puissance négative dans une région paraxiale, un cinquième élément optique (130, 530, 930) a une puissance positive dans une région paraxiale et le dernier élément optique (132, 532, 932) a une puissance négative dans une région paraxiale.

5. La lentille d'imagerie optique selon la revendication 1, dans laquelle au moins un élément optique de la lentille d'imagerie optique possède au moins une surface libre asymétrique.

6. La lentille d'imagerie optique selon la revendication 1, dans laquelle tous les éléments optiques de la lentille d'imagerie optique (100, 500, 900), incluant les premier et dernier éléments optiques (120, 520, 920, 132, 532, 932), sont constitués de matériau plastique.

7. Une lentille d'imagerie optique (100, 500, 900) comprenant une pluralité d'éléments optiques (120, 122, 126, 128, 130, 132, 520, 522, 526, 528, 530, 532, 920, 922, 926, 928, 930, 932), la lentille d'imagerie optique (100, 500, 900) ayant une valeur de champ de vision total comprise entre 110° et 140°, un rapport entre une longueur totale de parcours (105, 505, 905) et un diamètre d'empreinte d'image (110, 510, 910) compris entre 0.85 et 0.95, un rapport entre une valeur de résolution maximale (420, 820, 1220) et une valeur de résolution centrale (410, 810, 1210) supérieur à 1.75, et un rapport entre la valeur de résolution maximale (420, 820, 1220) et une valeur de résolution de bord (430, 830, 1230) supérieur à 1.75.

8. La lentille d'imagerie optique selon la revendication 7, dans laquelle la pluralité d'éléments optiques comprend six éléments optiques (120, 122, 126, 128, 130, 132, 520, 522, 526, 528, 530, 532, 920, 922, 926, 928, 930, 932).

9. La lentille d'imagerie optique selon la revendication 8, dans laquelle un premier élément optique (120, 520, 920) a une valeur de nombre d'Abbe supérieure à 40, un deuxième élément optique (122, 522, 922) a une valeur de nombre d'Abbe supérieure à 40, un troisième élément optique (126, 526, 926) a une valeur de nombre d'Abbe supérieure à 40, un quatrième élément optique (128, 528, 928) a une valeur de nombre d'Abbe inférieure à 40, un cinquième élément optique (130, 530, 930) a une valeur de nombre d'Abbe supérieure à 40 et un sixième élément optique (132, 532, 932) a une valeur de nombre d'Abbe inférieure à 40.

10. La lentille d'imagerie optique selon la revendication 8, dans laquelle un premier élément optique (120, 520, 920) a une puissance négative dans une région paraxiale, un deuxième élément optique (122, 522, 922) a une puissance positive dans une région paraxiale, un troisième élément optique (126, 526, 926) a une puissance positive dans une région paraxiale, un quatrième élément optique (128, 528, 928) a une puissance négative dans une région paraxiale, un cinquième élément optique (130, 530, 930) a une puissance positive dans une région paraxiale et un sixième élément optique (132, 532, 932) a une puissance négative dans une région paraxiale.

11. La lentille d'imagerie optique selon la revendication 7, dans laquelle au moins un de la pluralité d'éléments optiques possède au moins une surface libre asymétrique.

12. La lentille d'imagerie optique selon la revendication 7, dans laquelle la pluralité d'éléments optiques sont tous constitués de matériau plastique.
